# EUROPÄISCHE PATENTANMELDUNG

(11) **EP 4 733 054 A2**
(43) Veröffentlichungstag der Anmeldung: **29.04.2026**
(21) Anmeldenummer: 25196724.6
(22) Anmeldetag: 19.08.2025
(51) Int. Cl.: B29D 30/38, B26D 3/00, B26D 5/00, B29D 30/42, B29D 30/46

(54) **EINRICHTUNG ZUR VERARBEITUNG EINES BANDMATERIALS, INSBESONDERE EINES CORDBANDS**

(30) Priorität: 23.10.2024 DE 102024130830
(71) Anmelder: Fischer TireTech Germany GmbH, 96224 Burgkunstadt (DE)
(72) Erfinder: Schmidt, Frank, 95349 Thurnau (DE)
(74) Vertreter: Lindner Blaumeier Patent- und Rechtsanwälte

(57) **Zusammenfassung**

Einrichtung zur Verarbeitung eines Bandmaterials, insbesondere eines Cordbands, umfassend:
- eine Schneideinrichtung (5) zum Schneiden von Bandabschnitten (18) von einem Ausgangsband (17),
- ein der Schneideinrichtung (5) nachgeschaltetes, die geschnittenen Bandabschnitte (17) aufnehmendes Förderband (7) zum Fördern der Bandabschnitte (18), sowie
- eine dem Förderband (7) nachgeschaltete, die Bandabschnitte (18) übernehmende Spleißeinrichtung (11), in der die geschnittenen Bandabschnitte (18) zu einem Endlosband (21) aneinander gespleißt werden, gekennzeichnet durch eine dem Förderband (7) zugeordnete Erfassungseinrichtung (8) zum Erfassen wenigstens eines die Geometrie eines Bandabschnitts (18) beschreibenden Geometrieparameters, umfassend eine Sensorvorrichtung (9) zum Erfassen von Sensorinformationen zu einem ihr zugeführten Bandabschnitt (18) sowie eine Steuerungseinrichtung (10), die zum Ermitteln des wenigstens einen Geometrieparameters anhand der Sensorinformationen und zum Vergleichen des wenigstens einen Geometrieparametes mit einem Referenzparameter und zum Auslösen einer Aktion in Abhängigkeit des Vergleichsergebnisses eingerichtet ist.

## Beschreibung

Die Erfindung betrifft eine Einrichtung zur Verarbeitung eines Bandmaterials, insbesondere eines Cordbands, umfassend:
- eine Schneideinrichtung zum Schneiden von Bandabschnitten von einem Ausgangsband,
- ein der Schneideinrichtung nachgeschaltetes, die geschnittenen Bandabschnitte aufnehmendes Förderband zum Fördern der Bandabschnitte, sowie
- eine dem Förderband nachgeschaltete, die Bandabschnitte übernehmende Spleißeinrichtung, in der die geschnittenen Bandabschnitte zu einem Endlosband aneinander gespleißt werden.

Eine solche Einrichtung wird beispielsweise in der Reifenindustrie verwendet, um aus einem Ausgangsband, insbesondere einem klebrigen Cordband, sei es ein Textilcordband oder ein Stahlcordband, ein spezifisches, aus von dem Ausgangsband abgetrennten Bandabschnitten hergestelltes, gespleißtes Endlosband zu fertigen, das beispielsweise zur Herstellung von Gürtelstreifen eines Reifens benötigt wird. Das Ausgangsband ist üblicherweise zu einer Rolle gewickelt und in eine Abwickelstation aufgenommen, aus der es ausgewickelt wird und zunächst einer Schneideinrichtung zugeführt wird, in der von dem Ausgangsband einzelne Bandabschnitte geschnitten werden. Eine solche Schneideinrichtung des beispielsweise aus DE 20 2013 103 082 U1 bekannt. Die vorlaufende Kante des Ausgangsbands wird mit einer Fördereinrichtung wie beispielsweise einer Zange erfasst und durch eine Schneidvorrichtung, beispielsweise eine Schlagschere umfassend ein feststehendes Untermesser und ein bewegliches Obermesser, gezogen, wobei über die Ziehlänge die Breite des zu schneidenden Bandabschnitts definiert wird. Eine solche Fördereinrichtung respektive Zange ist beispielsweise in DE 20 2013 102 341 U1 beschrieben. Der geschnittene Bandabschnitt wird von einem Förderband aufgenommen, über das das Ausgangsband vor dem Schnitt mittels der Fördereinrichtung, also der Zange, gezogen wird, und über welches Förderband der jeweils geschnittene Bandabschnitt zu einer Spleißeinrichtung transportiert wird, in der die geschnittenen Bandabschnitte zu einem Endlosband aneinander gespleißt werden, jedoch mit unterschiedlicher Orientierung, verglichen mit dem Ausgangsband. In der Spleißeinrichtung wird die nachlaufende Kante des zuvor an das Endlosband angespleißten Bandabschnitts und die vorlaufende Kante des über das Förderband herangeförderten Bandabschnitts bezüglich einander positioniert, wonach mittels einer Spleißvorrichtung die beiden Kanten miteinander verspleißt werden. Die Spleißvorrichtung weist hierzu beispielsweise ein Spleißwerkzeug mittels Spleißkopf bzw. mehrerer Spleißköpfe auf. Dabei wird der Spleißkopf bzw. die Spleißköpfe den zuvor zueinander positionierten Kanten von oben zugeführt. Nach dem jeweiligen Aufsetzen der Spleißköpfe wird linear, im Verlauf der Spleißlinie, im angedrückten Zustand über das Bandmaterial in Richtung zu den seitlichen Bandkanten über das Bandmaterial gezogen. Die Spleißköpfe können lose laufen oder angetrieben sein. Bei dem Ziehen über das Bandmaterial wird dieses verdichtet und somit verspleißt. Auf diese Weise kann durch Aneinanderspleißen einer Vielzahl einzelner Bandstreifen ein Endlosband hergestellt werden. Eine solche Spleißeinrichtung ist beispielsweise aus DE 20 2014 101 735 U1 bekannt.

Für die Qualität der Spleißverbindung ist wichtig, dass die beiden zu verspleißenden Kanten bestmöglich bezüglich einander ausgerichtet sind, sodass sich ein gewünschter Kantenverlauf ergibt. Dies setzt voraus, dass die Geometrie der in der Spleißvorrichtung miteinander zu verspleißenden Bandabschnitte identisch ist. Regelmäßig weisen die Bandabschnitte die Form eines Parallelogramms auf, nachdem das Ausgangsband unter einem Winkel ‡ 90° zur Schneideinrichtung geführt wird. Jeder Bandabschnitt weist folglich eine vorlaufende Spitze auf, in der eine Längskante sowie eine schräg dazu verlaufende vorlaufende Kante auslaufen, wobei diese beiden Kanten den Spitzenwinkel definieren. Der Bandabschnitt weist weiterhin eine nachlaufende Spitze, also eine hintere Spitze auf, in der die parallele zweite Längskante sowie die schräg dazu verlaufende nachlaufende Kante auslaufen, wobei auch hier diese beiden Kanten den Spitzenwinkel definieren. Die beiden Spitzenwinkel sind idealerweise identisch, sie hängen vom Winkel, unter dem die Zuführeinrichtung des Ausgangsbands zur Schnittebene der Schneideinrichtung steht, ab.

Üblich ist es, dass nach Einrichtung der Abwickelstation sowie der Schneideinrichtung bezüglich des Zuführwinkels sowie des Ziehwinkels der Fördereinrichtung etc. ein Bandabschnitt geschnitten wird, der manuell hinsichtlich seiner Geometrie vermessen wird. Entspricht er den geforderten Geometrieparametern, so wird mit dem Bearbeitungsbetrieb gestartet. Von da an werden permanent die Bandabschnitte mit den gegebenen Einstellungen geschnitten und verspleißt.

Der Erfindung liegt das Problem zugrunde, eine demgegenüber verbesserte Einrichtung anzugeben.

Zur Lösung des Problems ist eine Einrichtung der eingangs genannten Art gekennzeichnet durch eine dem Förderband zugeordnete Erfassungseinrichtung zum Erfassen wenigstens eines die Geometrie eines Bandabschnitts beschreibenden Geometrieparameters, umfassend eine Sensorvorrichtung zum Erfassen von Sensorinformationen zu einem ihr zugeführten Bandabschnitt sowie eine Steuerungseinrichtung, die zum Ermitteln des wenigstens einen Geometrieparameters anhand der Sensorinformationen und zum Vergleichen des wenigstens einen Geometrieparametes mit einem Referenzparameter und zum Auslösen einer Aktion in Abhängigkeit des Vergleichsergebnisses eingerichtet ist.

Die Einrichtung zeichnet sich durch eine permanent gegebene Möglichkeit zur Überprüfung, ob die laufend geschnittenen und zur Spleißeinrichtung transportierten Bandabschnitte eine Geometrie aufweisen, die der gewünschten Zielgeometrie entspricht, aus. Hierzu ist eine dem Förderband, auf dem die geschnittenen Bandabschnitte abgelegt und zur Spleißeinrichtung transportiert werden, zugeordnete Erfassungseinrichtung vorgesehen, mittels welcher wenigstens ein, vorzugsweise mehrere Geometrieparameter, der oder die die Geometrie eines überprüften Bandabschnitts beschreiben, erfasst werden. Es werden also zu jedem geschnittenen und geförderten Bandabschnitt der oder die entsprechenden Geometrieparameter, also Ist-Parameter, erfasst. Hierzu ist eine Sensorvorrichtung vorgesehen, die entsprechende Sensorinformationen zu jedem ihr zugeführten Bandabschnitt erfasst. Die Erfassungseinrichtung umfasst des Weiteren eine Steuerungseinrichtung, der die erfassten Sensorinformationen gegeben werden. Die Steuerungseinrichtung ist dazu eingerichtet, anhand der Sensorinformationen den wenigstens einen Geometrieparameter zu ermitteln, also die Sensorinformationen entsprechend auszuwerten und den wenigstens einen Geometrieparameter anhand der Auswertung zu bestimmen. Dies geschieht mittels eines geeigneten softwarebasierten Algorithmus. Weiterhin ist die Steuerungseinrichtungen dazu eingerichtet, den wenigstens einen Geometrieparameter mit einem Referenzparameter zu vergleichen, also zu prüfen, ob der ermittelte Geometrieparameter dem zugehörigen Referenzparameter entspricht oder in einem definierten Toleranzbereich zum Referenzparameter liegt, oder nicht. In Abhängigkeit des Vergleichsergebnisses ist die Steuerungseinrichtung des Weiteren dazu eingerichtet, eine Aktion auszulösen, d. h., dass in Abhängigkeit des vorgenommenen Vergleichsergebnisses seitens der Steuerungseinrichtung eine oder mehrere spezifische Handlungen angesteuert oder eingeleitet werden, die insbesondere dazu dienen, im Falle eines negativen Vergleichsergebnisses, wenn also der Vergleich eine Diskrepanz zwischen dem erfassten Geometrieparameter und dem zugeordneten Referenzparametern zeigt, eine etwaige Korrektur dieser Geometriedifferenz zu ermöglichen.

Es hat sich herausgestellt, dass die Geometrie der geschnittenen Bandabschnitte über die Betriebsdauer geringfügig variieren kann, da das Bandmaterial, also das Ausgangsband, vor dem Schneiden gehandhabt wird, es wird abgewickelt und gefördert und über die Fördereinrichtung respektive die Zange durch die Schneidvorrichtung gezogen. Hierbei kann es im Laufe der Zeit zu etwaigen Variationen kommen, die sich in einer leicht veränderten Geometrie der Bandabschnitte, verglichen mit der gewünschten, idealen Geometrie, auswirken. Beispielsweise kann sich der Zuführwinkel, unter dem das Ausgangsband zur Schneideinrichtung transportiert wird, im Laufe der Betriebsdauer geringfügig ändern, was beispielsweise zu sich geringfügig ändernden Spitzenwinkeln und Breiten der geschnittenen Bandabschnitte führt. Auch kann die Fördereinrichtung respektive die Zange, die das Ausgangsband durch die Schneidvorrichtung zieht, im Laufe des Betriebs mit sich geringfügig änderndem Ziehwinkel ziehen, was ebenfalls Auswirkungen auf die Spitzenwinkel und die Breite der Bandabschnitte und damit die Länge etwaiger im Bandmaterial eingebetteter Fäden, wie im Falle eines Cordbands, sei es ein Textilcordband, sei es ein Stahlcordband, der Fall, hat. Die erfindungsgemäße Einrichtung erlaubt nun infolge der permanenten Kontrolle der Ist-Geometrie der kontinuierlich geschnittenen Bandabschnitte das sofortige Erkennen einer etwaigen Abweichung der Ist-Geometrie von einer Soll- oder Referenzgeometrie, sodass, wenn eine solche, aus dem Toleranzbereich gewanderte Abweichung erfasst wird, durch Einleiten einer Aktion reagiert werden kann, um die Abweichung wieder zu kompensieren, sodass wieder in ihrer Geometrie korrekte Bandabschnitte geschnitten und demzufolge auch ein die gesetzten Anforderungen erfüllendes Endlosband gespleißt werden kann.

Die Steuerungseinrichtung ist wie ausgeführt dazu eingerichtet, mindestens einen entsprechenden Geometrieparameter anhand der Sensorinformationen der Sensorvorrichtung zu ermitteln. Bevorzugt natürlich ist die Steuerungseinrichtung dazu eingerichtet, mehrere unterschiedliche Geometrieparameter zu ermitteln sowie die einzelnen unterschiedlichen Geometrieparameter mit mehreren entsprechenden Referenzparametern zu vergleichen. Jeder Bandabschnitt wird folglich in seiner Geometrie über mehrere Geometrieparameter charakterisiert, sodass über diese Mehrfach-Charakterisierung eine noch genauere Erfassung etwaige Abweichungen möglich ist, wie hierüber auch genauer ermittelt werden kann, was eine etwaige Ursache für die Abweichung sein kann.

Als ein Geometrieparameter kann beispielsweise der Winkel der vorlaufenden Spitze des Bandabschnitts, in welcher Spitze eine in Förderrichtung vorlaufende vordere Kante und eine Längskante des Bandabschnitts zusammenlaufen, seitens der Steuerungseinrichtung ermittelbar sein. Es wird also der Winkel der vorlaufenden, vorderen Spitze des geschnittenen Bandabschnitts erfasst, sodass durch Vergleich mit dem entsprechenden Referenzparameter, der den idealen Spitzenwinkel beschreibt, ermittelt werden kann, ob eine Abweichung des Ist-Winkels vom Soll-Winkel gegeben ist.

Alternativ oder zusätzlich kann als Geometrieparameter auch der Winkel einer nachlaufenden Spitze des Bandabschnitts ermittelbar sein, in welcher Spitze eine in Förderrichtung nachlaufende hintere Kante und eine Längskante des Bandabschnitts zusammenlaufen. Gemäß dieser Ausgestaltung wird der Winkel der hinteren Spitze des geschnittenen Bandabschnitts erfasst, wobei auch hier der erfasste Ist-Winkel mit dem zugeordneten Soll-Winkel verglichen wird und eine etwaige Abweichung festgestellt werden kann.

Zweckmäßig ist es, wenn sowohl der Winkel der vorlaufenden Spitze als auch der Winkel der nachlaufenden Spitze erfasst wird, da beide geringfügig differieren können, was aus der Handhabung des Ausgangsbands beispielsweise beim Durchziehen durch die Schneidvorrichtung mittels der Zange resultieren kann.

Alternativ oder zusätzlich kann als Geometrieparameter auch die Breite des Bandabschnitts quer zur Förderrichtung ermittelbar sein, also der Abstand der beiden Längskanten zueinander. Der Bandabschnitts soll eine Soll-Breite aufweisen, wobei auch diese im Laufe der Betriebszeit geringfügig variieren kann, was durch Ermittlung der Ist-Breite sofort erfasst werden kann.

Weiterhin ist es alternativ oder zusätzlich möglich, als Geometrieparameter die Länge von den Bandabschnitts durchsetzenden Fäden zu ermitteln. Wie beschrieben, kann als Bandmaterial ein Cordband wie beispielsweise Textilcordband, das in die Materialmatrix des Bands eingebettete Textilfäden aufweist, oder Stahlcordband, das in die Materialmatrix des Bands eingebettete Stahlcordfäden aufweist, verwendet und prozessiert werden. Im Ausgangsband verlaufen die Fäden in Längsrichtung des Bands, im geschnittenen Bandabschnitt idealerweise parallel zur der Vorderkante und der Hinterkante. Der Ist-Verlauf und damit die Länge der Fäden kann nun ebenfalls als Geometrieparameter erfasst werden und ebenfalls mit einem entsprechenden Referenzparameter verglichen werden.

Bevorzugt werden natürlich möglichst mehrere, insbesondere alle der angeführten Geometrieparameter seitens der Steuerungseinrichtungen erfasst, um denjenigen Bandabschnitt möglichst exakt zu charakterisieren und etwaige Abweichungen von der Soll-Geometrie respektive den Referenzparametern zu erfassen.

Wie ausgeführt, ist die Steuerungseinrichtung dazu eingerichtet, in Abhängigkeit des Vergleichsergebnisses eine entsprechende Aktion auszulösen. Diese Aktion wird insbesondere dann ausgelöst, wenn eine inakzeptable Abweichung des oder der Geometrieparameter von dem oder den Referenzparametern gegeben ist. Gemäß einer Erfindungsausgestaltung ist es in diesem Zusammenhang denkbar, dass seitens der Steuerungseinrichtung als Aktion über ein Ausgabemittel das Vergleichsergebnis oder eine auf dem Vergleichsergebnis basierende Information ausgebbar ist. Hierüber kann also dem Anwender über das Display eine entsprechende Information gegeben werden, die ihn das Vergleichsergebnis erkennen lässt. Beispielsweise kann eine unzulässige Abweichung des Ist-Winkels der vorlaufenden oder der nachlaufenden Spitze von dem zugeordneten Soll-Winkel, also dem Referenzparameter, angezeigt werden, also der konkrete Referenzwinkel, wozu der Ist-Winkel und der Soll-Winkel angezeigt werden können. Eine unzulässige Abweichung kann beispielsweise auch durch einen entsprechenden zusätzlichen Farbcode, beispielsweise ein roter Displayhintergrund o. ä., zusätzlich transparent gemacht werden kann. Hierüber kann der Anwender sofort eine etwaige Abweichung eines Geometrieparameters vom zugeordneten Referenzparameter erkennen. Er kann dann selbst eine entsprechende Handlung vornehmen, und beispielsweise den Zuführwinkel des Ausgangsbands zur Schneideinrichtung korrigieren, also die Orientierung der Abwickelstation, auch Letoff genannt, korrigieren, und/oder die Zange in ihrem Ziehwinkel und/oder ihre Ziehlänge etc. entsprechend nachjustieren und dergleichen.

Hierzu kann bei dieser Variante dem Anwender auch eine Handlungsanweisung gegeben werden, beispielsweise in Textform wie z.B. "Verstellung Winkel Letoff +0,1°" oder "Verstellung Winkel Letoff -0,2°" oder "Verstellung Ziehwinkel Zange +0,2°" oder" Verstellung Ziehwinkel Zange -0,3°" oder "Verkürzung Ziehlänge Zange um 2 mm" oder" Verlängerung Ziehlänge Zange um 1 mm" oder Ähnliches. Die entsprechende Handlungsanweisung kann seitens der Steuerungseinrichtung infolge der Auswertung der Sensorinformationen respektive des Vergleichsergebnisses und damit der erfassten Geometrieparameter respektive der entsprechenden Parameterabweichungen von den Referenzparametern ermittelt werden. Basierend auf diesen Handlungsanweisungen kann der Anwender sodann die entsprechenden Korrekturen vornehmen, sodass die nachfolgend geschnittenen Bandabschnitte wieder die Soll-Geometrie aufweisen.

Natürlich ist es auch denkbar, als Aktion über das Display dem Anwender auch mitzuteilen, wenn die Ist-Geometrie der Soll-Geometrie entspricht, wenn also die einzelnen Bandabschnitte Geometrieparameter aufweisen, die den Referenzparametern, unter Berücksichtigung einer etwaigen Toleranz, entsprechen. Auch diese Information kann für den Anwender von Vorteil sein, da er dann permanent Kenntnis darüber erhält, dass die geschnittenen Bandabschnitte dem Soll entsprechen und demzufolge auch das hergestellte Endlosband den Anforderungen entspricht. Beispielsweise kann diese positive Gut-Information durch Ausgabe der erfassten Vergleichsergebnisse, verbunden mit beispielsweise einer zugeordnet Farbcodierung wie beispielsweise einem grünen Displayhintergrund o. ä., ausgegeben werden, sodass der Anwender unmittelbar die positive Situation erfassen kann.

Die Einrichtung kann in Weiterbildung der Erfindung eine Zuführeinrichtung zum zuführen des Ausgangsbands zur Schneideinrichtung, die in ihrem Zuführwinkel einstellbar ist, und eine Fördereinrichtung zum Durchziehen des Ausgangsbands durch die Schneideinrichtung, die in ihrem Ziehwinkel und/oder der Ziehstrecke einstellbar ist, aufweisen. Die Zuführeinrichtung ist die bereits vorstehend beschriebene Abwickelstation bzw. der Letoff, die Fördereinrichtung z.B. die bereits vorstehend beschriebene Zange. In Weiterbildung der Erfindung kann nun, zusätzlich zur visuellen Ausgabe einer entsprechenden Information oder des Vergleichsergebnisses an einem Display, oder alternativ dazu, vorgesehen sein, dass die Steuerungseinrichtungen zum Ansteuern der Zuführeinrichtung und/oder der Fördereinrichtung in Abhängigkeit des Vergleichsergebnisses eingerichtet ist. Gemäß dieser Erfindungsausgestaltung ist eine entsprechende automatische Korrektur seitens der Steuerungseinrichtungen als Aktion ansteuerbar. D. h., dass die Steuerungseinrichtungen in Abhängigkeit des Vergleichsergebnisses, wenn dieses also eine entsprechende Diskrepanz des oder der Geometrieparameter zu dem oder den Referenzparametern zeigt, beispielsweise entsprechende Stellmittel der Zuführeinrichtung, also des Letoff, oder der Fördereinrichtung, also z.B. der Zange, ansteuert, um entsprechende Korrekturen im Zuführwinkel des Letoff und/oder dem Ziehwinkel oder der Ziehstrecke der Zange anzusteuern. Über diese Korrektur soll die Abweichung des oder der erfassten Geometrieparameter von dem oder den Referenzparametern ausgeglichen werden, d. h., dass die Einrichtung eine selbsttätige Korrektur vornimmt. Hierzu kann die Steuerungseinrichtung beispielsweise an der Zuführeinrichtung, also dem Letoff, den Antriebsmotor des Schwenkantriebs, mittels dem der Letoff um eine definierte Schwenkachse zur Adaption des Zuführwinkel zum damit des Schneidwinkels verstellt werden kann, ansteuern und so eine entsprechende Winkelkorrektur, regelmäßig im Zehntelbereich eines Winkelgrads, ansteuern. In entsprechender Weise kann eine Winkelkorrektur und Breitenkorrektur durch Ansteuerung der Stellmittel respektive Antriebsmotoren, über die die Zange zum Ziehen angetrieben wird, vorgenommen werden, wobei auch hier die Korrekturen regelmäßig im Zehntelbereich eines Winkelgrads liegen. Diese Ausgestaltung erlaubt demzufolge eine eigenständige Überwachungs- und Korrekturfunktion der Einrichtung, d. h., dass die Einrichtung einerseits selbsttätig etwaige Fehler und Abweichungen erkennen, und zum anderen selbsttätig auf entsprechende Fehler oder Abweichungen reagieren und diese durch entsprechende Ansteuerung der relevanten Komponenten beheben kann. Es ist also ein selbst korrigierendes System.

Auch in einem solchen Fall ist es zweckmäßig, wenn an einer Anzeigeeinrichtung wie einem Display eine entsprechende Information an den Anwender über eine vorgenommene Änderung ausgegeben wird, sodass dieser stets über etwaige selbsttätig von der Einrichtung durchgeführte Korrekturaktionen und deren Hintergrund informiert wird.

Wie beschrieben, wird über die Sensorvorrichtung jeder zugeführte Bandabschnitt entsprechend erfasst und sensiert und entsprechende Sensorinformationen ermittelt, die seitens der Steuerungseinrichtungen entsprechend ausgewertet werden. Die Sensorvorrichtung umfasst hierzu vorteilhaft wenigstens einen optischen Sensor auf, wobei natürlich auch mehr als nur ein Sensor vorgesehen sein kann. Der oder jeder Sensor kann in Form eines, vorzugsweise laserbasierten, Profilsensors oder einer Kamera ausgeführt sein. Mittels eines solchen, vorzugsweise laserbasierten, Profilsensors kann ein sehr genaues Bild des Bandabschnitts erfasst werden. Der Bandabschnitt liegt auf dem Förderband, bildet dort also eine Erhöhung, wobei etwaige Fäden in der Bandabschnittsfläche ebenfalls als leichte Erhöhung hervortreten können. Der Profilsensors tastet nun über einen Linienscan mittels eines Lasers permanent das Förderband ab und erfasst somit zwangsläufig den darauf liegenden, eine Erhöhung darstellenden Bandabschnitt. Es erfolgt also ein extrem schnelles Abtasten, korreliert mit der Fördergeschwindigkeit bzw. der kontinuierlich erfassten Ist-Position, was beispielsweise über entsprechende Servomotore und/oder Encoder, die das Förderband antreiben, erfolgen kann, sodass anhand dieser Informationen ein aus vielen abgetasteten Zeilen gebildetes Bild erstellt werden kann, das beispielsweise für die Auswertung seitens der Steuerungseinrichtungen herangezogen werden kann. Das Abtastfeld erstreckt sich über die gesamte Breite des Förderbands, auf dem der Bandabschnitt ruht, sodass, neben dem eigentlichen Geometrieparameter des Bandabschnitts, letztlich auch die Position des Bandabschnitts, gesehenen Querrichtung des Förderbands, ermittelt werden kann.

Alternativ zur Verwendung eines solchen Profilsensors kann auch eine Kamera verwendet werden, die kontinuierlich Bilder des unter ihr durchlaufenden Bandabschnitts aufnimmt und der Steuerungseinrichtungen liefert, die diese Bilder auswertet. Da der Bandabschnitt mit ausreichendem Kontrast in den Bildern gezeigt ist, kann die Steuerungseinrichtungen nun unter Verwendung eines geeigneten Algorithmus beispielsweise die entsprechenden Kantenverläufe etc. erfassen und den oder die entsprechenden Geometrieparameter bestimmen.

Der oder jeder Sensor befindet sich oberhalb des Förderbands und bevorzugt mittig bezogen auf die Breite des Förderbands, sodass es über seine gesamte Breite abgetastet bzw. aufgenommen werden kann und mit ihm natürlich der jeweilige Bandabschnitt. Auch eine außermittige Anordnung eines Sensors, insbesondere bei Verwendung mehreren Sensoren, ist natürlich denkbar.

Neben der Einrichtung selbst betrifft die Erfindung ferner ein Verfahren zum Betreiben einer Einrichtung zur Verarbeitung eines Bandmaterials, insbesondere eines Cordbands, umfassend:
- eine Schneideinrichtung zum Schneiden von Bandabschnitten von einem Ausgangsband,
- ein der Schneideinrichtung nachgeschaltetes, die geschnittenen Bandabschnitte aufnehmendes Förderband zum Fördern der Bandabschnitte, sowie
- eine dem Förderband nachgeschaltete, die Bandabschnitte übernehmende Spleißeinrichtung, in der die geschnittenen Bandabschnitte zu einem Endlosband aneinander gespleißt werden.

Dieses Verfahren zeichnet sich dadurch aus, dass mittels einer dem Förderband zugeordneten Erfassungseinrichtung wenigstens ein die Geometrie eines Bandabschnitts beschreibender Geometrieparameter erfasst und ausgewertet wird, wozu mittels einer Sensorvorrichtung Sensorinformationen zu einem ihr zugeführten Bandabschnitts erfasst werden, anhand welcher Sensorinformationen eine Steuerungseinrichtung den wenigstens einen Geometrieparameter ermittelt und den wenigstens einen Geometrieparametes mit einem Referenzparameter vergleicht und in Abhängigkeit des Vergleichsergebnisses wenigstens eine Aktion auslöst.

Dabei kann die Steuerungseinrichtung bevorzugt nicht nur einen Geometrieparameter ermitteln und mit seinem Referenzparameter vergleichen, sondern mehrere unterschiedliche Geometrieparameter ermitteln und mit ihren zugeordneten, mehreren Referenzparametern vergleichen. Ist nur bei einem Parameterpaar eine Abweichung festzustellen, kann bereits die Aktion ausgelöst werden.

Als Geometrieparameter kann der Winkel einer vorlaufenden Spitze des Bandabschnitts, in welcher Spitze eine in Förderrichtung vorlaufende Vorderkante und eine Längskante des Bandabschnitts zusammenlaufen, ermittelt werden.

Als, gegebenenfalls weiterer, Geometrieparameter kann auch der Winkel einer nachlaufenden Spitze des Bandabschnitts, in welcher Spitze eine in Förderrichtung nachlaufende Hinterkante und eine Längskante des Bandabschnitts zusammenlaufen, ermittelt werden.

Als, gegebenenfalls weiterer, Geometrieparameter kann ferner die Breite des Bandabschnitts quer zur Förderrichtung ermittelt werden.

Als, gegebenenfalls weiterer, Geometrieparameter kann schließlich auch die Länge von den Bandabschnitt durchsetzenden Fäden ermittelt werden.

Weiterhin kann vorgesehen sein, dass seitens der Steuerungseinrichtungen als Aktion über ein Ausgabemittel das Vergleichsergebnis oder eine anhand des Vergleichsergebnis ermittelte Information ausgegeben wird.

Schließlich kann, wenn die Einrichtung eine Zuführeinrichtung zum Zuführen des Ausgangsbands zur Schneideinrichtung, die in ihrem Zuführwinkel einstellbar ist, und eine Fördereinrichtung zum Durchziehen des Ausgangsbands durch die Schneideinrichtung, die in ihrem Ziehwinkel und/oder der Ziehstrecke einstellbar ist, aufweist, vorgesehen sein, dass die Steuerungseinrichtung die Zuführeinrichtung und/oder die Fördereinrichtung in Abhängigkeit des Vergleichsergebnisses ansteuert.

Sämtliche zur Einrichtung genannten Vorteile, Merkmale und Einzelheiten gelten gleichermaßen für das erfindungsgemäße Verfahren.

Weitere Vorteile und Einzelheiten der vorliegenden Erfindung ergeben sich aus den im folgenden beschriebenen Ausführungsbeispielen sowie anhand der Zeichnung. Dabei zeigen:
- Fig. 1: eine Prinzipdarstellung einer erfindungsgemäßen Einrichtung umfassend eine Zuführeinrichtung, eine dieser nachgeschaltete Schneideinrichtung nebst Fördereinrichtung, ein dieser nachgeschaltetes Förderband sowie eine diesem nachgeschaltete Spleißeinrichtung,
- Fig. 2: eine Prinzipdarstellung der Schneideinrichtung, des nachgeschalteten Förderbands sowie der Spleißeinrichtung in einer Seitenansicht,
- Fig. 3: eine Prinzipdarstellung der Anordnung aus Fig. 2 ohne Schneideinrichtung in einer Aufsicht,
- Fig. 4: eine Prinzipdarstellung des Förderbands mit zugeordneter Erfassungseinrichtung umfassend eine Sensorvorrichtung und eine Steuerungseinrichtung,
- Fig. 5: eine Vorderseitenansicht der Anordnung aus Fig. 4, und
- Fig. 6-9: Prinzipdarstellungen zur Erläuterung des Überprüfungs- und nachfolgenden Spleißvorgangs zur Herstellung eines Endlosbands.

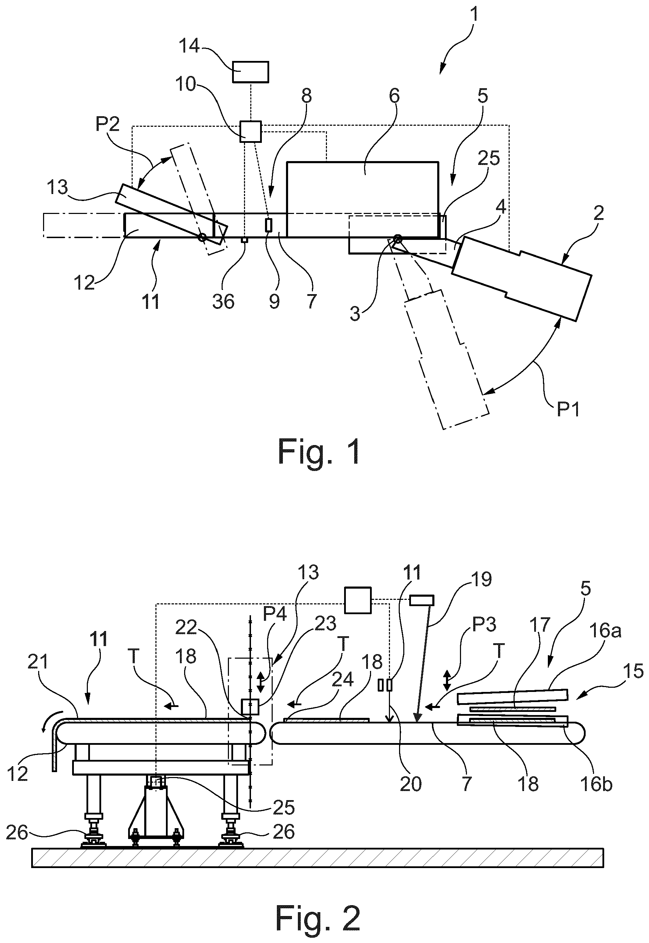

Fig. 1 zeigt eine erfindungsgemäße Einrichtung 1, umfassend eine Zuführeinrichtung 2 zum Zuführen eines nicht näher gezeigten Ausgangsbands, beispielsweise eines Cordbands, dass zu einer Rolle gewickelt ist, von der es abgewickelt wird. Wie durch den Pfeil P1 gezeigt, ist die Zuführeinrichtung, die auch als Letoff bezeichnet wird, in ihrem Winkel verstellbar, wozu entsprechende Stellmittel, die ein automatisches Verstellen bzw. Verschwenken um eine Drehachse 3 erlauben vorgesehen sind.

Die Zuführeinrichtung 2 umfasst ferner eine Materialzuführung 4, auf das das Ausgangsband gebracht und über welches es zu einer Schneideinrichtung 5 gefördert wird, die eine Fördereinrichtung 6, beispielsweise eine Zange, umfasst, mittels welcher das zugeführte Ausgangsband in exakt dem Winkel, unter dem die Zuführeinrichtung 2 zur positionsfesten Schneideinrichtung, die eine entsprechende Schneidvorrichtung 25 in Form beispielsweise eines Schlagmessers aufweist, steht, durch die Schneidvorrichtung 25 gezogen werden kann. Mittels der Schneideinrichtung respektive dem Schlagmesser ist es möglich, von dem Ausgangsband entsprechende Bandabschnitte abzuschneiden, die in Anbetracht des Zuführwinkels des Ausgangsbands, der ungleich 90° ist, wie Fig. 1 zeigt, die Form eines Parallelogramms aufweisen.

Die Schneideinrichtung 5 umfasst respektive ihr nachgeschaltet ein Förderband 7, mittels dem die geschnittenen Bandabschnitte abtransportiert werden. Diesem Förderband 7 zugeordnet ist eine Erfassungseinrichtung 8 zum Erfassen wenigstens eines die Geometrie eines solchen Bandabschnitts beschreibenden Geometrieparameters. Diese Erfassungseinrichtung 8 umfasst eine Sensorvorrichtung 9 zum Erfassen von Sensorinformationen zu jedem ihr zugeführten Bandabschnitt. Diese Sensorvorrichtung 9 umfasst einen oder mehrere Sensoren beispielsweise in Form eines laserbasierten Positionssensors oder einer Kamera, mittels welches oder welcher Sensoren es möglich ist, das Förderband 7 in seiner gesamten Breite zu erfassen und mithin auch jeden auf dem Förderband 7 liegenden Bandabschnitt. Die Erfassungseinrichtung umfasst ferner eine Steuerungseinrichtung 10, die dazu eingerichtet ist, aus den von der Sensorvorrichtung 9 gelieferten Sensorinformationen wenigstens einen Geometrieparameter, der eine bestimmte geometrische Ist-Eigenschaft eines Bandabschnitts beschreibt, zu ermitteln und diesen Geometrieparameter mit einem Referenzparameter, der eine entsprechende Soll-Eigenschaft des Bandabschnitts beschreibt, zu vergleichen. Hierüber wird geprüft, ob der Ist-Geometrieparameter dem Soll-Referenzparameter entspricht oder nicht. Weiterhin ist die Steuerungseinrichtung 10 dazu eingerichtet, in Abhängigkeit des Vergleichsergebnis des eine Aktion auszulösen. Hierauf sowie auf die Einbindung der Steuerungseinrichtung 10 in das Gesamtsystem wird nachfolgend noch eingegangen.

Weiterhin vorgesehen ist ein Sensor 36, der dem Förderband 7 zugeordnet ist, und über den die Querposition eine Längskante eines geschnittenen Bandabschnitts zu einer Referenzkante respektive dem Förderband 7 ermittelt wird, um die Ist-Lage des Bandabschnitts zu erfassen. Über eine nicht näher gezeigte Korrektureinrichtung, beispielsweise eine Zange, kann eine Korrektur eines etwaigen Querversatzes erfolgen, indem der Bandabschnitt quer verzogen wird. Alternativ zu einer solchen Zange kann die Korrektur auch durch Verschieben der nachfolgend beschriebenen Spleißeinrichtung 11 quer zur Transportrichtung erfolgen, d. h., dass die Spleißeinrichtung 11 entsprechend quer verfahrbar gelagert ist und in ihrer Querposition über ein entsprechendes Stellmittel wie einen Antriebsmotor verstellt werden kann.

Dem Förderband 7 nachgeschaltet ist eine Spleißeinrichtung 11 umfassend ein Transportband 12 sowie eine Spleißvorrichtung 13, mittels welcher Spleißvorrichtung 13 zwei auf dem Transportband 11 befindliche Bandabschnitte längs ihrer aneinanderliegenden Kanten verspleißt werden. Die Spleißvorrichtung 13 weist hierzu üblicherweise ein Spleißwerkzeug mittels Spleißkopf bzw. mehrerer Spleißköpfe auf. Dabei wird der Spleißkopf bzw. die Spleißköpfe den zuvor zueinander positionierten Kanten von oben zugeführt. Nach dem jeweiligen Aufsetzen der Spleißköpfe wird linear, im Verlauf der Spleißlinie, im angedrückten Zustand über das Bandmaterial in Richtung zu den seitlichen Bandkanten über das Bandmaterial gezogen. Die Spleißköpfe können lose laufen oder angetrieben sein. Bei dem Ziehen über das Bandmaterial wird dieses verdichtet und somit verspleißt. Die Spleißvorrichtung 13 ist in ihrem Raumwinkel ebenfalls verstellbar, wozu sie, wie durch den Doppelpfeil P2 dargestellt, um eine feste Drehachse verschwenkbar ist, sodass sie in ihrer Ausrichtung bezüglich des Kantenverlaufs der zu verspleißenden Kanten ausgerichtet werden kann.

Die Steuerungseinrichtung 10 ist nicht nur Teil der Erfassungseinrichtung 8, sondern steuert im Ausführungsbeispiel die gesamte Einrichtung 1. Sie kommuniziert einerseits mit einem Stellmittel der Zuführeinrichtung 2, über welches die Zufuhreinrichtung 2 automatisch zur Veränderung des Zuführwinkels verstellt werden kann. Hierbei handelt sich beispielsweise um einen Antriebsmotor, der eine Stellmechanik betätigt, über welche die Verschwenkung um die Drehachse 3 erfolgt. Die Steuerungseinrichtung 10 steuert des Weiteren die Fördereinrichtung 6, also die Zange, sodass diese hinsichtlich des Ziehwinkels als auch der Ziehstrecke entsprechend dem Zuführwinkel angepasst werden kann. Weiterhin kommuniziert die Steuerungseinrichtung 10 mit dem Sensor 36 und steuert die nicht näher gezeigte Korrektureinrichtung zur Korrektur eines Seitenversatzes an, sei es die dem Förderband 7 zugeordnete Zange, sei es das Stellmittel zum Verschieben der Spleißeinrichtung 11. Und schließlich kommuniziert die Steuerungseinrichtung 10 mit einem entsprechenden Stellmittel der Spleißeinrichtung 11, insbesondere mit dem Stellmittel, über die der Spleißwinkel, also die Raumposition der Spleißvorrichtung 13, verstellt werden kann. Weiterhin vorgesehen ist eine Anzeigeeinrichtung 14 in Form eines Displays, an dem entsprechende Informationen über die Steuereinrichtung 10 ausgegeben werden können.

Fig. 2 zeigt eine detailliertere Teilansicht der Einrichtung 1 aus Fig. 1. Gezeigt ist als Teil der Schneideinrichtung 5 das Schlagmesser 15 mit seinem vertikal beweglichen Obermesser 16a (siehe Pfeil P3) und dem positionsfesten Untermesser 16b, zwischen denen sich das Ausgangsband 17 befindet, von dem im vorherigen Zyklus ein Bandabschnitt 18 abgeschnitten wurde. Dieser Bandabschnitt 18 ruht auf dem Förderband 7, bei dem es sich um ein umlaufendes Förderband handelt. Mit dem Förderband 7 wird jeder Bandabschnitt 18 in Transportrichtung T transportiert. Hierbei wird jeder Bandabschnitt 18 durch den Erfassungsbereich der Sensorvorrichtung 9 bewegt, wie Fig. 2 zeigt, wobei der Erfassungsbereich 19 durch den Pfeil dargestellt ist. Ebenso wird jeder Bandabschnitt durch den Erfassungsbereich 20 des Sensors 36 bewegt, wie durch den Pfeil dargestellt.

Das Förderband 7 endet unmittelbar vor dem Transportband 12 der Spleißeinrichtung 11. Auf diesem ruht ein Endlosband 21, das durch Aneinanderspleißen einer Vielzahl einzelner Bandabschnitte 18 gebildet ist. Ein hinteres Ende des Bandabschnitts 18 ruht mit seiner nachlaufenden Kante 22 in der Spleißvorrichtung 13, von der das Spleißwerkzeug 23 gezeigt ist, das, wie durch den Pfeil P4 dargestellt ist, vertikal bewegt werden kann. Der noch auf dem Förderband 7 befindliche Bandabschnitt 18 wird nachfolgend auf das Transportband 12 übergeben, sodass seine vorlaufende Kante 24 unmittelbar benachbart zur nachlaufenden Kante 22 angeordnet ist. Beide befinden sich in der Spleißvorrichtung 13, und können durch Herabfahren des Spleißwerkzeug 23 miteinander verspleißt werden. In dieser Figur ist exemplarisch ein Stellmittel 25 in Form eines Antriebsmotors gezeigt, über welchen die auf Linearführungen 26 quer verschiebbar gelagerte Spleißeinrichtung 11 quer zur Transportrichtung T verfahren werden kann, wenn eine Korrektur der Längskante des Endlosband 21 bezüglich der Längskante des Bandes 18 erfolgen soll, wenn über den Sensor 36 ein etwaiger Querversatzes erfasst wurde.

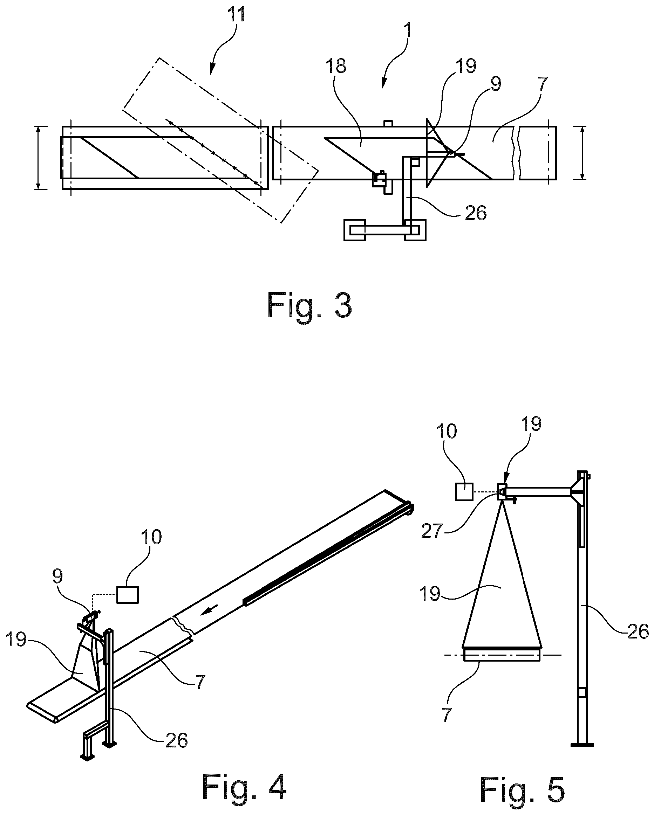

Fig. 3 zeigt eine Aufsicht auf die Einrichtung 1 aus Fig. 2. Gezeigt ist das Förderband 7 sowie ein auf ihm befindlicher Bandabschnitt 18, wie auch als Teil der Erfassungseinrichtung 8 die Sensorvorrichtung 9 mit ihrem Erfassungsbereich 19. Ersichtlich erstreckt sich dieser quer über die gesamte Breite des Förderbands 7, sodass der Bandabschnitt 18 in seiner Gesamtheit durch den Erfassungsbereich 19 geführt wird und entsprechende Sensorinformationen zu dem gesamten Bandabschnitt erfasst werden können. Die Sensorvorrichtung 9, also der bzw. die laserbasierten Positionssensoren oder die Kameras, befindet sich oberhalb des Förderbands 7 und damit oberhalb des Bandabschnitts 18, d. h., die Erfassung erfolgt von oben. Da der Bandabschnitt 18 auf dem Förderband 7 liegt, bildet er eine Erhöhung, sodass die entsprechenden Kanten und deren Verläufe exakt über entsprechende Sensorinformationen, die von dem Sensor respektive der Sensorvorrichtung 9 geliefert werden, beschrieben werden können und in der Steuerungseinrichtung 10 anhand dieser Sensorinformationen entsprechende Geometrieparameter des Bandabschnitts 18 erfasst werden können, auf welche nachfolgend noch im Detail eingegangen wird. Die Sensorvorrichtung 9 ist an einem entsprechenden Gestell 26 angeordnet, wie auch in Fig. 4 gezeigt ist.

Fig. 4 zeigt einen Ausschnitt des Förderbands 7 sowie das Gestell 26 mit der daran angeordneten Sensorvorrichtung 9, also dem oder den Sensoren in Form der Positionssensoren oder der Kameras, wie auch der Erfassungsbereich 19 dargestellt ist. Fig. 5 zeigt eine diesbezügliche Vorderseitenansicht, wobei hier exemplarisch auch der optische Sensor 27 der Sensorvorrichtung 9 dargestellt ist. Auch Fig. 5 zeigt, dass sich der Erfassungsbereich 19 über die gesamte Breite des Förderbands 7 erstreckt.

Wie beschrieben, dient die Erfassungseinrichtung 8 dazu, einen oder bevorzugt mehrere Geometrieparameter eines geschnittenen Bandabschnitts 18 zu erfassen und bezüglich der Korrelation mit einem oder entsprechend mehreren zugeordneten Referenzparametern zu vergleichen. Hierüber kann kontinuierlich zu jedem geschnittenen Bandabschnitt ermittelt werden, ob die Geometrie des Bandabschnitts der Soll-Geometrie entspricht oder davon abweicht. Insbesondere wenn letzteres der Fall ist wird eine entsprechende Aktion seitens der Steuerungseinrichtung 10 eingeleitet. Diese Aktion kann unterschiedlicher Natur sein. So kann bei Erfassung einer Abweichung beispielsweise das Stellmittel der Zuführeinrichtung 2 angesteuert werden, um den Zuführwinkel marginal zu korrigieren, wobei die Winkelkorrektur zumeist im Bereich weniger Zehntel Winkelgrad, also weniger Winkelminuten erfolgt. Zusätzlich oder alternativ kann auch der Ziehwinkel oder die Ziehstrecke der Fördereinrichtung 6 durch Ansteuern der diesbezüglichen Stellmittel seitens der Steuerungseinrichtung 10 zur Korrektur der Geometrieabweichung angepasst werden, wobei auch hier der Ziehwinkel um weniger Zehntel Winkelgrad, also wenige Winkelminuten zu korrigieren ist respektive die Ziehstrecke um wenige Zehntel Millimeter bis Millimeter. Durch Korrektur insbesondere dieser Parameter kann auf unmittelbare Weise eine entsprechende Geometriekorrektur der geschnittenen Bandabschnitte erfolgen, da ein Steuerungseingriff unmittelbar in einer Geometrieänderung resultiert, da bereits der nächste geschnittene Bandabschnitten entsprechend korrigiert ist. D. h., dass die Einrichtung 1 in der Lage ist, einerseits kontinuierlich die Geometrie der geschnittenen Bandabschnitte zu kontrollieren, und andererseits, wenn eine außerhalb der Toleranzen liegende Geometrieabweichung von der Soll-Geometrie, also von den Referenzparametern erfasst wird, umgehend eine automatische Korrektur vornehmen, indem das oder die entsprechenden Stellmittel angesteuert werden.

Zusätzlich kann an dem Display 14 eine entsprechende Information an den Anwender ausgegeben werden, die die Erfassung einer erforderlichen Abweichung anzeigt und auch, dass eine entsprechende Korrektur automatisiert vorgenommen wird.

Alternativ ist es auch denkbar, dass an dem Display 14 bei Erfassung einer eine Korrektur erfordernden Abweichung eine Handlungsanweisung an den Anwender ausgegeben wird, wie er entsprechende Korrekturen im Zuführwinkel der Zuführeinrichtung 2 und/oder dem Ziehwinkel und/oder der Ziehstrecke der Fördereinrichtung 6 vornehmen muss, wenn die entsprechenden Korrekturen respektive Änderungen der Steuerparameter der Stellmittel manuell einzugeben respektive auszulösen sind, wenn also keine automatische Korrektur vorgesehen ist.

Unabhängig davon, wie konkret nun die Korrektur erfolgt, kann an dem Display 14 natürlich auch stets die erfassten Geometrieparameter respektive das Vergleichsergebnis angezeigt werden, auch wenn dieses anzeigt, dass keine unzulässige Abweichung der Ist-Geometrie von der Soll-Geometrie gegeben ist.

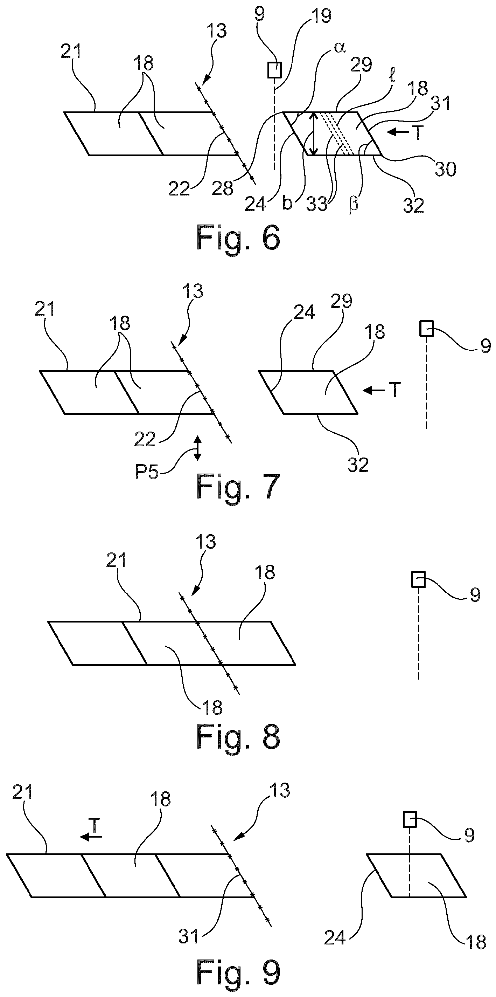

Die Fig. 6-9 zeigen beispielhaft den Ablauf des Bandtransports eines geschnittenen Bandabschnitts 18 zur Sensorvorrichtung 9 sowie die diesbezügliche Erfassung verschiedener Geometrieparameter, wie auch den nachfolgenden Spleißvorgang.

Fig. 6 zeigt einen auf dem nicht näher gezeigten Förderband 2 befindlichen Bandabschnitt 18 sowie ein auf dem nicht näher gezeigten Transportband 12 befindliches Endlosband 21, das exemplarisch aus zwei gezeigten, miteinander verspleißt im Bandabschnitten 18 gebildet ist. Die nachlaufende Kante 22 befindet sich in der Spleißvorrichtung 13, also unterhalb des Spleißwerkzeugs 23. Die vorlaufende Kante 24 des zugeführten Bandabschnitts 18 ist noch entsprechend weit entfernt.

Wie Fig. 6 zeigt, ist der Bandabschnitt 18 noch vor dem Erfassungsbereich 19 der Sensorvorrichtung 9. Bei weiterer Förderung in Transportrichtung T wird der Bandabschnitt 18 in den Erfassungsbereich eingefahren, und zwar mit seiner vorlaufenden Spitze 28 zuerst. In dieser vorlaufenden Spitze läuft einerseits die vorlaufende Kante 24 und andererseits im gezeigten Beispiel die obere Längskante 29 zusammen. Sie verlaufen unter einem Winkel α zueinander. Der parallelogrammartige Bandabschnitt 18 weist ferner eine zweite, nachlaufende Spitze 30 auf, in der die nachlaufende Kante 31 sowie die zweite Längskante 32 unter einem Winkel β zusammenlaufen, sodass sich insgesamt die Geometrie eines Parallelogramms ergibt. Der Winkel α sollte idealerweise dem Winkel β entsprechen. Der Bandabschnitt 18 weist ferner eine Breite b auf, gesehen quer zur Förderrichtung T. Dargestellt sind ferner mehrere den Bandabschnitt 18 respektive das Bandmaterial durchlaufende Fäden 33, bei denen es sich um Textilfäden oder Stahlfäden handelt, die parallel zur den Kanten 24, 31 verlaufen und eine Länge l besitzen.

Wie beschrieben, läuft der Bandabschnitt 18 zunächst mit seiner vorlaufenden Spitze 28 in den Erfassungsbereich 19 und wird mit zunehmender Förderung vollständig durch den Erfassungsbereich 19 hindurch transportiert. Die Sensorvorrichtung 9, sei es der Positionssensor, sei es die Kamera, nimmt kontinuierlich Sensorinformationen auf, wobei der Positionssensor mit seinem Laser mit hoher Frequenz Linienscans quer zur Transportrichtung T aufnimmt, während die Kamera kontinuierliche Bilder aufnimmt. Die entsprechenden Sensorinformationen werden der Steuerungseinrichtungen 10 gegeben, die diese zur Ermittlung der Geometrieparameter auswertet.

Als Geometrieparameter werden beispielsweise der Winkel α und/oder der Winkel βa bestimmt, wie auch die Breite b oder die Länge l. Hierzu verfügt die Steuerungseinrichtung über eine geeignete Auswertesoftware, also einen geeigneten softwarebasierten Auswertealgorithmus, um anhand der Sensorinformationen, seien es die Sensorsignale der Linienscans, seien es die Bildsignale, die entsprechenden Geometrieparameter zu erfassen. Diese werden sodann wie bereits beschrieben mit den in der Steuerungseinrichtung 10 abgelegten Referenzparametern zum Winkel α, zum Winkel β, zur Breite b und/oder zur Länge l verglichen und, je nach Vergleichsergebnis, wie vorstehend beschrieben entsprechend eine oder mehrere Aktionen ausgelöst.

Fig. 7 zeigt die Situation, in der der Bandabschnitt 18 weitertransportiert wurde und vollständig durch die Sensorvorrichtung 9 hindurchgeschoben wurde, wobei die Sensorvorrichtung 9 hier aus Darstellungsgründen nach rechts versetzt gezeigt ist. Der Bandabschnitt 18 wurde näher zur Spleißeinrichtung 13 transportiert, die, wie der Doppelpfeil P5 zeigt, zu Korrekturzwecken quer verschoben wurde, sofern dieser Korrekturmechanismus und nicht ein dem Förderband 2 zugeordneter Korrekturmechanismus, der am Bandabschnitt 18 angreift, vorgesehen ist. In jedem Fall sind der Bandabschnitt 18 bzw. seine Längskanten 29, 32 und die Längskanten 34, 35 des Endlosband 21 bzw. des zuletzt an gespleißten Bandabschnitts 18 miteinander fluchtend ausgerichtet.

Bei weiterer Förderung gelangt der antransportierte Bandabschnitt in den Bereich der Spleißvorrichtung 13 und wird unterhalb der Spleißvorrichtung 13 positioniert, sodass seine vorlaufende Kante 24 benachbart zur nachlaufenden Kante 22 positioniert ist. Die beiden Kanten 22, 24 können parallel zueinander verlaufen, bevorzugt jedoch verlaufen sie unter einem minimalen Winkel zueinander, sodass sich zwischen ihnen ein äußerst schmaler, sich jedoch leicht von einer Längskante zu anderen Längskante öffnender Spalt ergibt, was für die Spleißqualität von Vorteil sein kann. In der finalen Spleißposition, wenn also der herangeförderte Bandabschnitt 18 in Ruhe ist, beginnt der Spleißvorgang, indem das Spleißwerkzeug vertikal nach unten fährt und die beiden Kanten 22, 24 miteinander verspleißt werden. Unmittelbar im Anschluss daran fährt das Spleißwerkzeug wieder nach oben, sodass das gespleißte Endlosband 21 wieder freigegeben wird und über das Transportband 7 und 12 abtransportiert wird, und zwar exakt um die Länge des angespleißten Bandabschnitts 18, dessen nachlaufende Kante 31 in der Position, in der der Transport des Endlosband 21 stoppt, wiederum exakt in der Spleißvorrichtung 13, also exakt unter dem Spleißwerkzeug positioniert ist. An die nachlaufende Kante 31 kann sodann ein weiterer Bandstreifen 18, der sich im Beispiel gemäß Fig. 9 bereits im Bereich der Sensorvorrichtung 9 befindet und in seiner Geometrie erfasst wird, mit seiner vorlaufenden Kante 24 an gespleißt werden.

Sollte sich im Rahmen der Vermessung des Bandabschnitts 18, wie zu den Fig. 6 und 7 beschrieben, und der nachfolgenden Auswertung der Sensorinformationen zu Ermittlung der Geometrieinformationen und dem Vergleich mit den Referenzinformationen ergeben, dass der in den Fig. 6 und 7 gezeigte Bandabschnitt 18 in seiner Ist-Geometrie geringfügig von der Soll-Geometrie, definiert über die Referenzinformationen, abweicht, so kann seitens der Steuerungseinrichtungen 10 unmittelbar auf diese Abweichung reagiert werden, indem die entsprechenden Stellmittel, wie vorstehend beschrieben, automatisch angesteuert werden, oder der Anwender entsprechend über das Display 14 informiert wird und manuell entsprechende Handlungen vornehmen kann. Bevorzugt wird insbesondere die automatische Verstellung, da diese extrem schnell erfolgt und hierüber unmittelbar bei Erfassung einer Abweichung reagiert und korrigiert werden kann. D. h., dass je nach Konfiguration der Einrichtung 1 der nächste geschnittene Bandabschnitt oder der übernächste geschnittene Bandabschnitt bereits entsprechend korrigiert sein kann, sodass im Fortgang das Endlosband 21 wiederum nur aus entsprechende geometrisch den Anforderungen entsprechenden Bandabschnitten gebildet wird.

## Patentansprüche

1. Einrichtung zur Verarbeitung eines Bandmaterials, insbesondere eines Cordbands, umfassend:
- eine Schneideinrichtung (5) zum Schneiden von Bandabschnitten (18) von einem Ausgangsband (17),
- ein der Schneideinrichtung (5) nachgeschaltetes, die geschnittenen Bandabschnitte (18) aufnehmendes Förderband (7) zum Fördern der Bandabschnitte (18), sowie
- eine dem Förderband (7) nachgeschaltete, die Bandabschnitte (18) übernehmende Spleißeinrichtung (11), in der die geschnittenen Bandabschnitte (18) zu einem Endlosband (21) aneinander gespleißt werden,
**gekennzeichnet durch** eine dem Förderband (7) zugeordnete Erfassungseinrichtung (8) zum Erfassen wenigstens eines die Geometrie eines Bandabschnitts (18) beschreibenden Geometrieparameters, umfassend eine Sensorvorrichtung (9) zum Erfassen von Sensorinformationen zu einem ihr zugeführten Bandabschnitt (18) sowie eine Steuerungseinrichtung (10), die zum Ermitteln des wenigstens einen Geometrieparameters anhand der Sensorinformationen und zum Vergleichen des wenigstens einen Geometrieparametes mit einem Referenzparameter und zum Auslösen einer Aktion in Abhängigkeit des Vergleichsergebnisses eingerichtet ist.

2. Einrichtung nach Anspruch 1, **dadurch gekennzeichnet, dass** die Steuerungseinrichtung (10) zum Ermitteln mehrerer unterschiedlicher Geometrieparameter und zum Vergleichen der mehreren Geometrieparameter mit mehreren Referenzparametern eingerichtet ist.

3. Einrichtung nach Anspruch 1 oder 2, **dadurch gekennzeichnet, dass** als Geometrieparameter der Winkel (α) einer vorlaufenden Spitze (28) des Bandabschnitts (18), in welcher Spitze (28) eine in Förderrichtung (T) vorlaufende vordere Kante (24) und eine Längskante (29) des Bandabschnitts (18) zusammenlaufen, ermittelbar ist.

4. Einrichtung nach einem der vorangehenden Ansprüche, **dadurch gekennzeichnet, dass** als Geometrieparameter der Winkel (β) einer nachlaufenden Spitze (30) des Bandabschnitts (18), in welcher Spitze (30) eine in Förderrichtung (T) nachlaufende hintere Kante (31) und eine Längskante (32) des Bandabschnitts (18) zusammenlaufen, ermittelbar ist.

5. Einrichtung nach einem der vorangehenden Ansprüche, **dadurch gekennzeichnet, dass** als Geometrieparameter die Breite (b) des Bandabschnitts quer zur Förderrichtung (T) ermittelbar ist.

6. Einrichtung nach einem der vorangehenden Ansprüche, **dadurch gekennzeichnet, dass** als Geometrieparameter die Länge (l) von den Bandabschnitt (18) durchsetzenden Fäden (33) ermittelbar ist.

7. Einrichtung nach einem der vorangehenden Ansprüche, **dadurch gekennzeichnet, dass** seitens der Steuerungseinrichtung (10) als Aktion über ein Ausgabemittel (14) das Vergleichsergebnis oder eine auf dem Vergleichsergebnis basierende Information ausgebbar ist.

8. Einrichtung nach einem der vorangehenden Ansprüche, **dadurch gekennzeichnet, dass** eine Zuführeinrichtung (2) zum Zuführen des Ausgangsbands (17) zur Schneideinrichtung (5), die in ihrem Zuführwinkel einstellbar ist, und eine Fördereinrichtung (6) zum Durchziehen des Ausgangsbands (17) durch die Schneideinrichtung (5) , die in ihrem Ziehwinkel und/oder der Ziehstrecke einstellbar ist, vorgesehen ist, wobei die Steuerungseinrichtung (10) zum Ansteuern der Zuführeinrichtung (2) und/oder der Fördereinrichtung (6) in Abhängigkeit des Vergleichsergebnisses eingerichtet ist.

9. Einrichtung nach einem der vorangehenden Ansprüche, **dadurch gekennzeichnet, dass** die Sensorvorrichtung (9) wenigstens einen optischen Sensoren (27) in Form eines, vorzugsweise laserbasierten, Profilsensors oder einer Kamera aufweist.

10. Einrichtung nach Anspruch 9, **dadurch gekennzeichnet, dass** der wenigstens eine Sensor (27) oberhalb des Förderbands (7) und mittig oder außermittig bezogen auf die Breite des Förderbands (7) angeordnet ist.

11. Verfahren zum Betreiben einer Einrichtung (1) zur Verarbeitung eines Bandmaterials, insbesondere eines Cordbands, umfassend:
- eine Schneideinrichtung (5) zum Schneiden von Bandabschnitten (18) von einem Ausgangsband (17),
- ein der Schneideinrichtung (5) nachgeschaltetes, die geschnittenen Bandabschnitte (18) aufnehmendes Förderband (7) zum Fördern der Bandabschnitte (18), sowie
- eine dem Förderband (7) nachgeschaltete, die Bandabschnitte (18) übernehmende Spleißeinrichtung (11), in der die geschnittenen Bandabschnitte (18) zu einem Endlosband (21) aneinander gespleißt werden,
**dadurch gekennzeichnet, dass** mittels einer dem Förderband (7) zugeordneten Erfassungseinrichtung (8) wenigstens ein die Geometrie eines Bandabschnitts (18) beschreibender Geometrieparameter erfasst und ausgewertet wird, wozu mittels einer Sensorvorrichtung (9) Sensorinformationen zu einem ihr zugeführten Bandabschnitts (18) erfasst werden, anhand welcher Sensorinformationen eine Steuerungseinrichtung (10) den wenigstens einen Geometrieparameter ermittelt und den wenigstens einen Geometrieparametes mit einem Referenzparameter vergleicht und in Abhängigkeit des Vergleichsergebnisses wenigstens eine Aktion auslöst.

12. Verfahren nach Anspruch 11, **dadurch gekennzeichnet, dass** die Steuerungseinrichtung (10) mehrere unterschiedliche Geometrieparameter ermittelt und mit mehreren Referenzparametern vergleicht.

13. Verfahren nach Anspruch 11 oder 12, **dadurch gekennzeichnet, dass** als Geometrieparameter der Winkel einer vorlaufenden Spitze (28) des Bandabschnitts (18), in welcher Spitze (28) eine in Förderrichtung (T) vorlaufende vordere Kante (24) und eine Längskante (29) des Bandabschnitts (18) zusammenlaufen, ermittelt wird.

14. Verfahren nach einem der Ansprüche 11 bis 13, **dadurch gekennzeichnet, dass** als Geometrieparameter der Winkel einer nachlaufenden Spitze (30) des Bandabschnitts (18), in welcher Spitze (30) eine in Förderrichtung (T) nachlaufende hintere Kante (31) und eine Längskante (32) des Bandabschnitts (18) zusammenlaufen, ermittelt wird.

15. Verfahren nach einem der Ansprüche 11 bis 14, **dadurch gekennzeichnet, dass** als Geometrieparameter die Breite (b) des Bandabschnitts (18) quer zur Förderrichtung (T) ermittelt wird.

16. Verfahren nach einem der Ansprüche 11 bis 15, **dadurch gekennzeichnet, dass** als Geometrieparameter die Länge (l) von den Bandabschnitt (18) durchsetzenden Fäden (33) ermittelt wird.

17. Verfahren nach einem der Ansprüche 11 bis 16, **dadurch gekennzeichnet, dass** seitens der Steuerungseinrichtung (10) als Aktion über ein Ausgabemittel (14) das Vergleichsergebnis oder eine anhand des Vergleichsergebnisses ermittelte Information ausgegeben wird.

18. Verfahren nach einem der Ansprüche 11 bis 17, **dadurch gekennzeichnet, dass** die Einrichtung (1) eine Zuführeinrichtung (2) zum Zuführen des Ausgangsbands (17) zur Schneideinrichtung (5), die in ihrem Zuführwinkel einstellbar ist, und eine Fördereinrichtung (6) zum Durchziehen des Ausgangsbands (17) durch die Schneideinrichtung (5), die in ihrem Ziehwinkel und/oder der Ziehstrecke einstellbar ist, aufweist, wobei die Steuerungseinrichtung (10) die Zuführeinrichtung (2) und/oder die Fördereinrichtung (6) in Abhängigkeit des Vergleichsergebnisses ansteuert.
